# EUROPÄISCHE PATENTSCHRIFT

(11) **EP 1 626 793 B1**
(45) Veröffentlichungstag und Bekanntmachung des Hinweises auf die Patenterteilung: **21.06.2006**
(21) Anmeldenummer: 04738512.5
(22) Anmeldetag: 13.05.2004
(51) Int. Cl.: B01D 29/64, B01D 29/01, B01D 29/44, E02B 8/02

(54) **FEINSIEBRECHEN**
FINE-SCREENED GRID
GRILLE A TAMIS FIN

(30) Priorität: 13.05.2003 DE 10321374
(43) Veröffentlichungstag der Anmeldung: 22.02.2006
(73) Patentinhaber: Grimmel, Olaf, 61239 Ober-Mörlen (DE)
(72) Erfinder: Grimmel, Olaf, 61239 Ober-Mörlen (DE)
(74) Vertreter: Hebing, Norbert
(86) Internationale Anmeldenummer: PCT/DE2004/001011
(87) Internationale Veröffentlichungsnummer: WO 2004/101105

(56) Entgegenhaltungen:
- DE-A- 2 944 047
- DE-C- 87 062
- FR-A- 2 164 100
- FR-A- 2 310 970
- FR-A- 2 728 596
- GB-A- 1 525 871
- US-A- 5 051 174

## Beschreibung

Die Erfindung bezieht sich auf einen Feinsiebrechen mit einem Rechenrost und mit einem motorisch angetriebenen, entlang der inneren Mantelfläche des Rechenrostes bewegbaren Schieber zum Räumen des Rechenrostes, wobei der Schieber mit einem Schieberarm verbunden ist, der mit seinem vom Schieber abgewandten Ende um eine Drehachse drehbar an einem schwenkbaren Führungshebel gelagert ist, wobei in einer Lage des Führungshebels, der Räumlage, die Drehachse sich in einer Position befindet, bei der der Schieber am Rechenrost anliegt, und in anderen Lagen, den Freilagen, die Drehachse sich in einer Position befindet, bei der der Schieber vom Rechenrost entfernt ist.

Feinsiebrechen kommen u. a. bei der Reinigung von Industrie- und Kommunalabwässern zum Einsatz. Diese müssen, bevor sie weitere Reinigungsstufen durchlaufen, von groben Fremdkörpern befreit werden. Eine solche Reinigungsstufe ist z. B. ein Sandfang, in dem feinkörnige Partikel und Schwebstoffe aus dem Abwasser entfernt werden. Prinzipiell können mit solchen Anlagen aber auch andere Flüssigkeiten von Grobteilen befreit werden.

Bei einem Feinsiebrechen wird das zu reinigende Wasser durch einen schräg in einen Wasserlauf gestellten Rechenrost geleitet, der entsprechend seiner Spaltbreite feine bis grobe Partikel zurückhält und bevorzugt einen bogenförmigen Verlauf hat. Das sich vor bzw. auf dem Rechenrost sammelnde Material wird mit einem Schieber zum oberen Ende des Rechenrostes bewegt, wo es über die Abwurfkante des Rechenrostes in einen Behälter oder in ein Förderorgan fällt. Der Schieber wird sodann auf einer vom Rechenrost entfernten Bahn an den Beginn des Rechenrostes zurückgeführt und beginnt dort von Neuem die Räumarbeit. Derartige Anlagen werden typischerweise als Feinsiebrechen bezeichnet, ohne dass damit eine Einschränkung hinsichtlich der Größe der zurückgehaltenen Partikel verbunden sein soll.

In der deutschen Offenlegungsschrift DE 41 19 593 A1 ist ein solcher Feinsiebrechen beschrieben. Der Schieber befindet sich an einem Schieberarm, der mit seinem vom Schieber abgewandten Ende um eine Drehachse drehbar an einem schwenkbaren Führungshebel in Form einer Plattform gelagert ist. In der Grundstellung des Führungshebels befindet sich die motorisch angetriebene Drehachse in der Zylinderachse des viertelzylindrisch ausgebildeten Rechenrostes, so dass die Bewegungsbahn des Schiebers zum Räumen des Rechenrostes unmittelbar an diesen anliegend verläuft. Damit der Schieber auf einer entgegengesetzt verlaufenden Bahn an den Beginn des Rechenrostes zurückbewegt werden kann, wird die Plattform nach hinten gekippt, so dass die Drehachse vom Rechenrost entfernt wird und der Schieber in einem gewissen Abstand (in der Offenlegungsschrift mit x bezeichnet) zum Rechenrost gelangt.

Generell tritt bei Feinsiebrechen und auch bei den Feinsiebrechen nach der genannten Offenlegungsschrift das Problem auf, dass sich am Rechenrost nicht nur relativ kleine Teile sammeln, die problemlos vom Schieber mitgenommen werden können, sondern häufig auch sehr große Teile, die eigentlich nicht typisch sind für Abwässer. So können sich z. B. Steine aus der Kanalisationswandung gelöst haben oder es gelangt Bauschutt in die Kanalisation, wenn an offenen Kanalisations-Eintrittsstellen Bauarbeiten durchgeführt worden sind.

Solche Teile führen dazu, dass der Schieber in seiner Räumbewegung blockiert wird, was letztlich zu einer Beschädigung der Anlage führen kann, aber auf jeden Fall zu einer Unterbrechung des Räumbetriebes führt, die sofort behoben werden muss.

Da solche Anlagen aber häufig unbeaufsichtigt laufen, führt ein Blockieren des Schiebers oft zu einer längeren Unterbrechung, bevor der Schaden festgestellt und behoben werden kann.

Die Erfindung beruht somit auf dem Problem, einen Feinsiebrechen zu schaffen, der auch bei Belastung mit schweren und unförmigen Teilen weiterarbeitet.

Zur Lösung des Problems sieht die Erfindung vor, dass der schwenkbare Führungshebel frei beweglich ist, so dass er aufgrund seiner Schwerkraft in die Räumlage bringbar und durch eine vom Räumgut auf den Schieber aufgebrachten Kraft in eine Freilage bewegbar ist.

Im Gegensatz zu der Anlage gemäß der DE 41 19 593 A1 ist der Führungshebel nicht motorisch verstellbar, sondern kann vielmehr einer dem Schieber aufgezwungenen Bewegung folgen. Normalerweise wird daher der Schieber durch das Gewicht des Führungshebels gegen den Rechenrost gedrückt, so dass, dieser praktisch spaltfrei an diesem entlang bewegt wird und dabei kleine Partikel, die nicht durch den Rechenrost gefallen sind, mitnimmt. Befinden sich größere Teile vor dem Rechenrost, so läuft der Schieber über diese hinweg, wobei er sich vom Rechenrost entfernt und damit den Führungshebel in eine Freilage bringt. Die Schwenkbarkeit des Führungshebels ermöglicht somit nicht wie in der DE 41 19 593 A1 einen Rücklauf des Schiebers im Abstand zum Rechenrost, sondern ermöglicht vielmehr, dass der Schieber sich während der Räumbewegung vom Rechenrost entfernen kann, um größere, dort liegende Teile zu überfahren. In einigen Fällen verhaken sich die Teile am Schieber, so dass diese mitgenommen werden, obwohl der Schieber nicht unmittelbar am Rechenrost anliegt.

Diese großen Teile bleiben aber in der Regel am Beginn des Rechenrostes liegen und können bei Gelegenheit entfernt werden. Die Räumleistung des Feinsiebrechens wird dabei nur unwesentlich eingeschränkt. Es ist also ein unbeaufsichtigter Dauerbetrieb möglich.

Die freie Beweglichkeit der Drehachse hat außerdem den Vorteil, dass ein Verschleiß der Schieberkante durch ein Heranrücken der Räumlage der Drehachse an den Rechenrost selbsttätig kompensiert wird, so dass der Schieber unabhängig vom Verschleiß stets eng am Rechenrost anliegt.

Vorzugsweise hat der Rechenrost des Feinsiebrechens einen bogenförmigen Verlauf, insbesondere eine Viertel-Zylinder-Form, wie dies auch schon aus der genannten Offenlegungsschrift gezeigt ist. Allerdings ermöglicht die Kniehebelanordnung aus Schieberarm und Führungshebel entsprechend der Kinematik eines solchen Kniehebels andere Formen des Bogenverlaufs des Rechenrostes, die möglicherweise für die Räumleistung besser geeignet sind. Es wäre z. B. denkbar, dass der Rechenrost am Beginn ein wenig flacher und erst später steiler verläuft. Insofern ist eine Viertel-Zylinder-Anordnung als eine mögliche, wenn auch nach dem jetzigen Erkenntnisstand bevorzugte Form anzusehen.

Des Weiteren hat es sich als praktikabel erwiesen, einen Motor zum drehenden Antrieb des Schiebers an der Drehachse anzubringen und mit einer Drehmomentstütze am Führungshebel abzustützen. Dies erhöht letztlich auch das Gewicht des Führungshebels, mit dem der Schieber in die Räumlage gedrückt wird, was die Räumleistung verbessert.

Als besonders praktikabel hat es sich erwiesen, die Schwenkachse des Führungshebels oberhalb des Rechenrostes in einer vertikalen Verlängerung seines oberen Endes anzuordnen. Dies ergibt zum einen einen besonders kompakten Aufbau bei einem relativ langen Führungshebel. Dies wiederum hat den Vorteil, dass auch bei einem relativ großen Versatz des Schiebers der Schwenkwinkel des Führungshebels nicht zu groß wird.

Vorzugsweise beträgt die Schrägstellung des Führungshebels gegenüber einer Horizontalen zwischen 30° und 60°.

Der konstruktive Aufbau des Feinsiebrechens ist dadurch gekennzeichnet, dass der Rechenrost zwischen zwei parallel verlaufenden Seitenwänden angeordnet ist, dass der Führungshebel ein Doppelhebel ist, dessen beide Hebelarme außerhalb der Seitenwände angeordnet sind und dass in jeder Seitenwand ein gekrümmt verlaufendes Langloch vorhanden ist, durch das die Drehachse hindurchgeführt ist.

Eine solche Anordnung hat den Vorteil, dass die beiden Hebelarme sich außerhalb des von den beiden Seitenwänden gebildeten Gehäuses befinden und damit für Reparaturzwecke leicht zugänglich sind. Dies gilt insbesondere dann, wenn der Motor, wie oben schon erwähnt, an einem der Hebelarme befestigt ist und somit zugänglich bleibt. Außerdem ist er dort nicht den Wassernebeln ausgesetzt, die sich innerhalb des Gehäuses oberhalb des Rechenrostes bilden.

Die Räumleistung kann erhöht werden, wenn die Drehachse mit wenigstens zwei Schiebern versehen ist und gegenüberliegend an der Drehachse befestigt ist. Denkbar wären auch drei Schieber, die in Abständen von jeweils 120° liegen. Vier oder mehr Schieber sind offensichtlich nicht so praktikabel, weil dann jeweils zwei Schieber im Eingriff mit dem Rechenrost stehen und sich beide von diesem entfernen würden, falls einer durch ein Hindernis vom Rechenrost weggedrückt wird.

Mit einem solchen, ein oder mehrere Schieber aufweisenden Feinsiebrechen ist ein kontinuierlicherer Betrieb vorgesehen, d. h. die Drehachse behält ihren Drehsinn bei, was die Steuerung des Feinsiebrechens wesentlich vereinfacht. Insbesondere braucht kein zusätzlicher Stellmotor vorgesehen werden, um für den Rücklauf einen Abstand des Schiebers zum Rechenrost zu erzeugen. Andere Feinsiebrechen besitzen, um diesen Abstand zu erzeugen, spezielle Rückführungskulissen. Auch auf diese kann ebenfalls verzichtet werden.

Zur Aufnahme des Rechengutes ist am oberen Ende des Rechenrostes, jenseits der Abwurfkante, eine Auffangrinne mit einem Schneckenförderer o. ä. angeschlossen.

Um den Übertrag des Rechengutes von dem Schieber in die Auffangrinne zu verbessern, ist eine Spülanlage vorgesehen, die mehrere Spüldüsen aufweist, die schräg auf den Bereich vor dem oberen Rechenrostende ausgerichtet sind. Wenn sich der Schieber in dieser oberen Position befindet, spülen die Spüldüsen das Rechengut in die Auffangrinne hinein. Damit das eingespülte Wasser nicht an der Außenseite der Auffangrinne überläuft, liegt der an den Rechenrost anschließende Rinnenrand tiefer als der außen liegende Rinnenrand. Hiermit ist gewährleistet, dass überschüssiges Wasser nur zum Rechenrost zurückläuft. Davon mitgeführte, feste Bestandteile gelangen damit zwangsläufig wieder auf den Rechenrost zurück.

Vorzugsweise sind die Spüldüsen an den Gehäusewänden befestigt und befinden sich oberhalb des Rechenrostes beidseitig der Vertikalebene, in der sich der Schieberarm bewegt. Sie behindern dadurch nicht die umlaufende Bewegung des Schieberarmes und können, da sie ortsfest angebracht sind, leicht mit Wasser versorgt werden.

Um eine ausreichend lange Spülzeit zur Verfügung zu haben, ist ein Schalter vorgesehen, mit der die Position des Schiebers am oberen Rechenrostende feststellbar ist, sowie eine Steuerung, die für einen gewissen Zeitraum nach dem Ansprechen des Schalters den Antriebsmotor aus- und die Spülanlage einschaltet.

Im Folgenden soll anhand eines Ausführungsbeispieles die Erfindung näher erläutert werden. Dazu zeigen:
- Fig. 1: Eine Seitenansicht einer erfindungsgemäßen Feinsiebrechenanlage, insbesondere zur Verdeutlichung der Kinematik der Führung eines an einem Rechenrost entlang geführten Schiebers, und

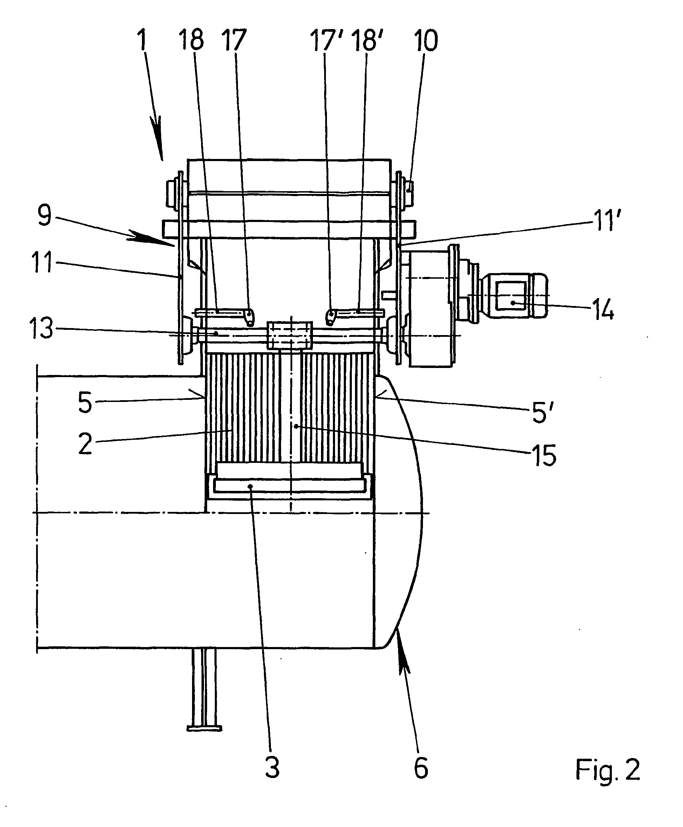

- Fig.2: eine Draufsicht auf eine Feinrechenanlage gemäß Fig. 1.

Ein Feinsiebrechen 1 besteht im Wesentlichen aus einem Rechenrost 2 und einem Schieber 3. Der Rechenrost 2 verläuft auf einem Viertelkreisbogen, hat also die Form eines Viertel-Hohlzylinders. Das untere Ende verläuft tangential in den Boden 4 eines Zulaufes. Der Rechenrost 2 sowie der Boden 4 sind von beiden Seiten von je einer Seitenwand 5, 5' eingeschlossen. Bei der hier dargestellten Ausführungsform ist der Feinsiebrechen 1 in einen Ausschnitt des Behälters eines Sandfanges 6 eingesetzt, so dass das durch den Rost rinnende Wasser unmittelbar in den Sandfang 6 gelangt. An der einen Seitenwand 5 befindet sich ein seitlicher Zulauf 7. An das obere Ende des Rechenrostes 2 schließt sich eine Auffangrinne 8 mit einer hier nicht näher dargestellten Förderschnecke an. Auf den beiden Gehäusewänden 5, 5' aufliegend befindet sich eine Schutzhaube 19.

Oberhalb der Seitenwände 5, 5' befindet sich in einer vertikalen Verlängerung des oberen Endes des Rechenrostes 2 eine Schwenkachse 10, an der zwei einen Führungshebel 9 bildende Hebelarme 11, 11' drehfest gehalten sind, die sich außerhalb der Seitenwände 5, 5' befinden. Sie ragen in einem Winkel von ca. 45° schräg nach unten, so dass sich ihre Enden in etwa oberhalb des Rechenrostanfanges befinden. Durch gekrümmt verlaufende Schlitze 12 in den Seitenwänden 5, 5' erstreckt sich zwischen den Hebelarmen 11, 11' eine an den Hebelarmen 11, 11' gelagerte Drehachse 13, die von einem Motor 14, der an der Drehachse befestigt und mit einer Drehmomentstütze an einem der Hebelarme 14 abgestützt ist, angetrieben wird. An einem zentralen Schiebearm 15, der drehfest mit der Drehachse 13 verbunden ist, befindet sich der Schieber 3.

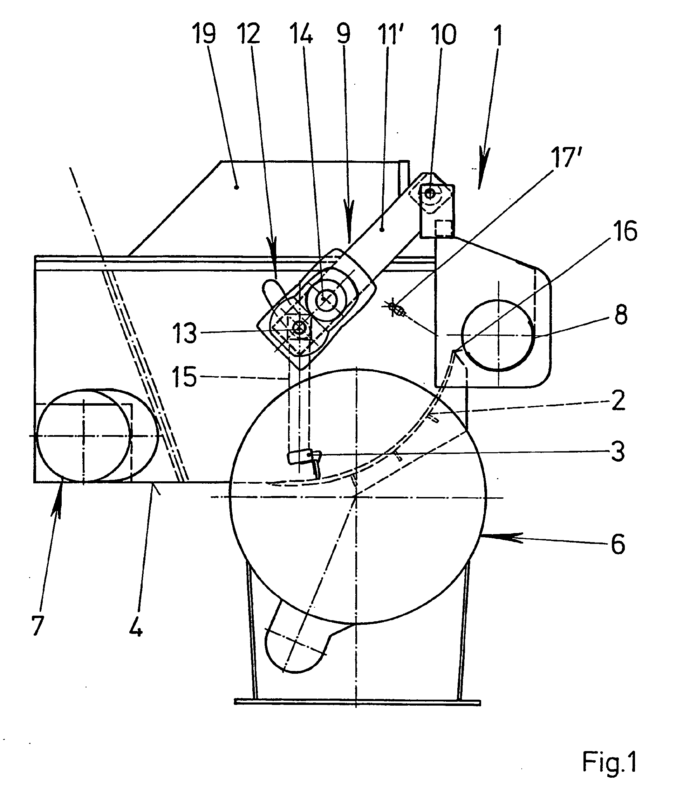

Der Motor 14 treibt die Drehachse 13 gemäß der Darstellung der Figur 1 gegen den Uhrzeigersinn an, so dass sich der Schieber 3 auf einer Kreisbahn bewegt, die entlang des Rechenrostes 2 verläuft. Dabei werden kleinere Partikel, die nicht durch den Rechenrost 2 gefallen sind, von der Fläche des Rechenrostes 2 zum oberen Ende mitgenommen und kippen dort über eine Abwurfkante 16 in die Aufnahmerinne 8 über, wo sie von der Förderschnecke verdichtet und zur Seite transportiert werden. An der Drehachse 13 befindet sich wenigstens ein weiterer Arm mit einem Schieber, der nicht näher dargestellt ist.

Sollten sich vor dem Rechenrost 2, insbesondere an dessen Anfang, größere Teile befinden, die nicht mitgenommen werden können, entweder weil sie zu schwer sind oder weil sie sich im Rechenrost 2 verfangen haben, so weicht der Schieber 3 aus, indem er sich vom Rechenrost 2 entfernt, was dadurch ermöglicht wird, dass der Führungshebel 9 nach oben schwenken kann und die Drehachse 13 dabei nach oben und hinten bewegt wird. Sobald das von den größeren Teilen gebildete Hindernis passiert ist, drückt das Gewicht des Kniehebels, bestehend aus dem Führungshebel 9 und dem Schieberarm 15, den Schieber 3 wieder gegen den Rechenrost 2.

Um den Abwurf des vom Schieber 3 zum oberen Enden des Rechenrostes 2 gebrachten Rechengutes in die Auffangrinne 8 zu verbessern, ist eine Spüleinrichtung, bestehend aus zwei Spüldüsen 17, 17', vorgesehen, die über zwei an den Seitenwänden 5, 5' befestigte, wasserführende Halter 18, 18' an dem Gehäuse gehalten sind. Zwischen den Spüldüsen 17, 17' befindet sich ein Freiraum, durch den der Schieberarm 15 bei seiner Drehbewegung hindurch bewegt wird.

Ein nicht näher dargestellter Schalter bewirkt, dass der Motor 14 ausgeschaltet wird, sobald sich der Schieber 3 am oberen Ende des Rechenrostes 2 befindet. Die Spüleinrichtung wird eingeschaltet, wodurch die Spüldüsen 17, 17' von hinten Wasser auf den Schieber 3 spritzen, so dass das dort befindliche Rechengut in die Auffangrinne 8 gespült wird. Überschüssiges Wasser läuft über den inneren Rinnenrand zurück zum Rechenrost 2. Damit kein Wasser nach außen schwappt, ist die äußere Rinnenrand der Auffangrinne 8 höher als deren Innenrand.

### Bezugszeichenliste

- 1: Feinsiebrechen
- 2: Rechenrost
- 3: Schieber
- 4: Boden
- 5, 5': Seitenwand

- 6: Sandfang
- 7: Zulauf
- 8: Auffangrinne
- 9: Führungshebel

- 10: Schwenkachse
- 11, 11': Hebelarm
- 12: Schlitze
- 13: Drehachse
- 14: Motor

- 15: Schieberarm
- 16: Abwurfkante
- 17, 17': Spüldüse
- 18, 18': Halter
- 19: Schutzhaube

## Patentansprüche

1. Feinsiebrechen mit einem Rechenrost (2) und mit einem motorisch angetriebenen, entlang der inneren Mantelfläche des Rechenrostes (2) bewegbaren Schieber (3) zum Räumen des Rechenrostes (2), wobei der Schieber (3) mit einem Schieberarm (15) verbunden, der mit seinem vom Schieber (3) abgewandten Ende um eine Drehachse (13) drehbar an einem schwenkbaren Führungshebel (9) gelagert ist, wobei in einer Lage des Führungshebels (9), der Räumlage, die Drehachse (13) sich in einer Position befindet, bei der der Schieber (3) am Rechenrost (2) anliegt, und in anderen Lagen, den Freilagen, die Drehachse (13) sich in einer Position befindet, bei der der Schieber (3) vom Rechenrost (2) entfernt ist, **dadurch gekennzeichnet, dass** der schwenkbare Führungshebel (9) frei beweglich ist, so dass er auf Grund seiner Schwerkraft in die Räumlage bringbar und durch eine vom Räumgut auf den Schieber (3) aufgebrachten Kraft in eine Freilage bewegbar ist.

2. Feinsiebrechen nach Anspruch 1, **dadurch gekennzeichnet, dass** der Rechenrost (2) einen Viertelzylinder bildet, dass in der Räumlage die Drehachse der Zylinderachse des Rechenrostes (2) entspricht und in den Freilagen die Drehachse weiter als der Zylinderradius von der Mantelfläche des Rechenrostes (2) entfernt ist.

3. Feinsiebrechen nach Anspruch 1 oder 2, **dadurch gekennzeichnet, dass** ein Motor (14) zum Antrieb des Schiebers (3) an der Drehachse (13) angebracht ist und über eine Drehmomentstütze am Führungshebel (9) abgestützt ist.

4. Feinsiebrechen nach Anspruch 1 oder 2, **dadurch gekennzeichnet, dass** die Schwenkachse (10) des Führungshebels (9) oberhalb der Rechenrostes (2) in einer vertikalen Verlängerung des oberen Endes des Rechenrostes (2) angeordnet ist.

5. Feinsiebrechen nach Anspruch 4, **dadurch gekennzeichnet, dass** die Schrägstellung des Führungshebels (9) bezogen auf seine Räumlage zwischen 30° und 60° beträgt.

6. Feinsiebrechen nach einem der vorhergehenden Ansprüche, **dadurch gekennzeichnet, dass** der Rechenrost (2) zwischen zwei parallel verlaufenden Seitenwänden (5, 5') angeordnet ist, dass der Führungshebel (9) ein Doppelhebel ist, dessen beide Hebelarme (11, 11') außerhalb der Seitenwände (5, 5') angeordnet sind, und in jeder Seitenwand (5, 5') ein gekrümmt verlaufendes Langloch (12) vorhanden ist, durch das die Drehachse (13) hindurchgeführt ist.

7. Feinsiebrechen nach einem der vorhergehenden Ansprüche, **dadurch gekennzeichnet, dass** an der Drehachse (13) in gleichmäßigen Winkelabständen wenigstens zwei Schieberarme (15) mit je einem Schieber (3) angeordnet ist und die Drehachse (13) mit gleichbleibender Drehrichtung angetrieben ist.

8. Feinsiebrechen nach einem der vorhergehenden Ansprüche, **dadurch gekennzeichnet, dass** sich an dem oberen Ende des Rechenrostes (2) eine Auffangrinne (8) mit einer Förderschnecke anschließt.

9. Feinsiebrechen nach Anspruch 8, **dadurch gekennzeichnet, dass** der sich an den Rechenrost (2) anschließende Rinnenrand der Auffangrinne (8) tiefer liegt als deren gegenüberliegende Rinnenrand.

10. Feinsiebrechen nach Anspruch 8 oder 9, **dadurch gekennzeichnet, dass** eine Spülanlage mit Spüldüsen (17, 17') vorgesehen ist, die schräg auf den Bereich vor dem oberen Rechenrostende ausgerichtet sind.

11. Feinsiebrechen nach Anspruch 10, **dadurch gekennzeichnet, dass** die Spüldüsen (17, 17') sich oberhalb des Rechenrostes (2) beidseitig der Ebene, in der sich der Schieberarm (15) bewegt, befinden.

12. Feinsiebrechen nach Anspruch 10 oder 11, **dadurch gekennzeichnet, dass** mittels eines Schalters eine Position des Schiebers (3) am oberen Rechenrostende feststellbar ist und dass eine Steuerung vorgesehen ist, die für einen gewissen Zeitraum nach dem Ansprechen des Schalters den Motor (14) aus- und die Spülanlage einschaltet.

## Claims

1. A fine sieve screen with a screen grill (2) and with a motor driven slide (3) that can be moved along the inner surface area of the screen grill (2) for clearing the screen grill (2), wherein the slide (3) is connected to a slide arm (15), which is pivoted on a swivel guide lever (9) at its end facing away from the slide (3), wherein, in one position of the guide lever (9), the clearing position, the rotary shaft (13)is located in a position in which the slide (3) rests on the screen grill (2), and in other positions, the free positions, the rotary shaft (13) is located in a position in which the slide (3) is distant from the screen grill (2), **characterised in that** the swivel guide lever (9) is freely movable so that it can be brought into the clearing position because of its centre of gravity, and is movable by a force applied by the material to be cleared to the slide (3).

2. The fine sieve screen according to Claim 1, **characterised in that** the screen grill (2) forms a square cylinder, **in that** the axis of rotation corresponds to the cylindrical axis of the screen grill (2), and the axis of rotation, in the free positions, is further away from the surface area of the screen grill (2) than the cylinder radius.

3. The fine sieve screen according to Claim 1 or 2, **characterised in that** a motor (14) is fitted to the rotary shaft (13) for driving the slide (3) and is supported by a torque support on the guide lever (9).

4. The fine sieve screen according to Claim 1 or 2, **characterised in that** the swivel axis (10) of the guide lever (9) is arranged above the screen grill (2) in a vertical extension of the upper end of the screen grill (2).

5. The fine sieve screen according to Claim 4, **characterised in that** the oblique position of the guide lever (9) is between 30° and 60° related to its clearing position.

6. The fine sieve screen according to one of the preceding claims, **characterised in that** the sieve screen (2) is arranged between two parallel lateral walls (5, 5'), **in that** the guide lever (9) is a double lever both of whose lever arms (11, 11') are arranged outside the lateral walls (5, 5'), and a curved slot (12) is present in each lateral wall (5, 5'), through which slot the rotary shaft (13) is guided.

7. The fine sieve screen according to one of the preceding claims, **characterised in that** at least two slide arms (15) are each arranged on the rotary shaft (13) at uniform angular distances, with a slide (3), and the rotary shaft (13) is driven in a constant direction of rotation.

8. The fine sieve screen according to one of the preceding claims, **characterised in that** a scoop (8) with a conveyor worm is connected to the upper end of the sieve screen (2).

9. The fine sieve screen according to Claim 8, **characterised in that** the grooved edge of the scoop (8) connected to the sieve screen (2) is lower than its opposing grooved edge.

10. The fine sieve screen according to Claim 8 or 9, **characterised in that** a washing system is provided with washing nozzles (17, 17'), which are aligned obliquely to the region in front of the upper sieve screen end.

11. The fine sieve screen according to Claim 10, **characterised in that** the washing nozzles (17, 17') are located above the sieve screen (2) on both sides of the plane in which the slide arm (15) moves.

12. The fine sieve screen according to Claim 10 or 11, **characterised in that** a position of the slide (3) can be established at the upper end of the sieve screen by means of a switch, and **in that** a control system is provided which switches the motor (14) off and the washing system on for a certain period after the switch responds.

## Revendications

1. Grille de retenue à tamis fin, avec une grille (2) et avec un curseur à entraînement par moteur, déplaçable le long de la surface d'enveloppe de la grille (2) pour dégriller la grille (2), le curseur (3) étant relié à un bras de curseur (15) qui par son extrémité opposée au curseur (3) est logé de façon rotative autour d'un axe de rotation (13) sur un levier de guidage pivotant (9), dans une position du levier de guidage (9), la position de dégrillage, l'axe de rotation (13) se trouvant dans une position dans laquelle le curseur (3) s'appuie sur la grille (2) et dans d'autres positions, les positions libres, l'axe de rotation (13) se trouvant dans une position dans laquelle le curseur (3) est éloigné de la grille (2), **caractérisée en ce que** le levier de guidage pivotant (9) est librement mobile, pour que sous l'effet de sa gravité, il puisse être amené dans la position de dégrillage et que par une force appliquée par les produits dégrillés sur le curseur (3), il puisse être déplacé dans une position libre.

2. Grille de retenue à tamis fin selon la revendication 1, **caractérisée en ce que** la grille (2) forme un quart de cylindre, **en ce que** dans la position de dégrillage, l'axe de rotation correspond à l'axe du cylindre de la grille (2) et **en ce que** dans les positions libres, l'axe de rotation est plus éloigné de la surface d'enveloppe de la grille (2) que le rayon du cylindre.

3. Grille de retenue à tamis fin selon la revendication 1 ou 2, **caractérisée en ce qu'**un moteur (14) pour l'entraînement du curseur (3) est monté sur l'axe de rotation (13) et supporté sur le levier de guidage (9) par l'intermédiaire d'un support de couple de rotation.

4. Grille de retenue à tamis fin selon la revendication 1 ou 2, **caractérisée en ce que** l'axe de pivotement (10) du levier de guidage (9) est disposé au-dessus de la grille (2), dans un prolongement vertical de l'extrémité supérieure de la grille (2).

5. Grille de retenue à tamis fin selon la revendication 4, **caractérisée en ce que** la position inclinée du levier de guidage (9) est de 30° à 60° par rapport à sa position de dégrillage.

6. Grille de retenue à tamis fin selon l'une quelconque des revendications précédentes, **caractérisée en ce que** la grille (2) est disposée entre deux parois latérales (5, 5') s'étendant à la parallèle, **en ce que** le levier de guidage (9) est un double levier dont les deux bras de levier (11, 11') sont disposés à l'extérieur des parois latérales (5, 5') et **en ce que** dans chaque paroi latérale (5, 5'), se trouve un trou oblong à trajet courbé (12), au travers duquel l'axe de rotation (13) est guidé.

7. Grille de retenue à tamis fin selon l'une quelconque des revendications précédentes, **caractérisée en ce qu'**au moins deux bras de curseurs (15) avec un curseur (3) chacun sont disposés sur l'axe de rotation (13), à des distances angulaires régulières et **en ce que** l'axe de rotation (13) est entraîné dans un sens de rotation constant.

8. Grille de retenue à tamis fin selon l'une quelconque des revendications précédentes, **caractérisée en ce qu'**une rigole collectrice (8) avec une vis de transport se raccorde sur l'extrémité supérieure de la grille (2).

9. Grille de retenue à tamis fin selon la revendication 8, **caractérisée en ce que** le bord de rigole de la rigole collectrice (8) qui se raccorde sur la grille (2) est situé plus bas que son bord de rigole opposé.

10. Grille de retenue à tamis fin selon la revendication 8 ou 9, **caractérisée en ce qu'**on a prévu un dispositif de rinçage avec des buses de rinçage (17, 17'), qui sont orientées à l'oblique sur la zone à l'avant de l'extrémité supérieure de la grille.

11. Grille de retenue à tamis fin selon la revendication 10, **caractérisée en ce que** les buses de rinçage (17, 17') se trouvent au-dessus de la grille (2), des deux côtés du plan dans lequel le bras de curseur (15) se déplace.

12. Grille de retenue à tamis fin selon la revendication 10 ou 11, **caractérisée en ce qu'**une position du curseur (3) sur l'extrémité supérieure de la grille est réglable au moyen d'un interrupteur et **en ce qu'**on a prévu une commande, qui pour une certaine période après le déclenchement de l'interrupteur arrête le moteur (14) et met en marche le dispositif de rinçage.
